# EUROPÄISCHE PATENTSCHRIFT

(11) **EP 0 732 351 B1**
(45) Veröffentlichungstag und Bekanntmachung des Hinweises auf die Patenterteilung: **06.06.2001**
(21) Anmeldenummer: 96250062.5
(22) Anmeldetag: 14.03.1996
(51) Int. Cl.: C08G 69/28, C08G 69/30, C08G 69/46

(54) **Verfahren und Vorrichtung zur Herstellung von Polyamiden**
Process and apparatus for the preparation of polyamides
Procédé et appareillage pour la préparation de polyamides

(30) Priorität: 14.03.1995 DE 19510698
(43) Veröffentlichungstag der Anmeldung: 18.09.1996
(73) Patentinhaber: Inventa-Fischer GmbH, 13509 Berlin (DE)
(72) Erfinder: Weger, Friedrich, Dr., D-14055 Berlin (DE); Hagen, Rainer, Dr., D-13465 Berlin (DE)
(74) Vertreter: Pfenning, Meinig & Partner

(56) Entgegenhaltungen:
- EP-A- 0 284 968
- EP-A- 0 703 264
- DD-A- 91 566
- DE-A- 2 723 549
- GB-A- 1 044 128
- US-A- 3 155 637
- US-A- 3 307 271
- US-A- 3 480 596
- US-A- 3 634 357
- US-A- 3 821 171
- US-A- 4 755 590

## Beschreibung

Die Erfindung betrifft ein Verfahren zur Herstellung von Polyamiden nach dem Oberbegriff des Hauptanspruchs sowie eine Vorrichtung zur Durchführung dieses Verfahrens.

Polyamide werden im technischen Maßstab überwiegend durch Polykondensation in der Schmelze hergestellt. Während der Polykondensation nimmt die Kettenlänge des Polymers und damit die Viskosität der Schmelze stark zu. Damit wächst die Dicke der an den Reaktorwänden und -einbauten haftenden Schmelzeschichten, der thermische Abbau des Polymers gewinnt immer mehr Einfluß und die Produktqualität nimmt ab. Deshalb wird die Polykondensation in der Schmelze bei einer Kettenlänge des Polymers abgebrochen, bei der der thermische Abbau anfängt, sich störend bemerkbar zu machen.

Für manche Anwendungen werden Produkte mit größerer Kettenlänge, als auf diesem Wege erreichbar ist, benötigt, zum Beispiel für die Extrusion von Folien, Profilen, Rohren und Halbzeug. Zur Herstellung solcher Produkte wird Polymergranulat, das durch Polykondensation in der Schmelze erzeugt wurde, einer Nachkondensation in der festen Phase unterworfen. Bei diesem Prozeß wird das Polyamid in Form von Granulat oder Pulver auf eine Temperatur zwischen 10° C und etwa 60° C unterhalb seines Schmelzpunktes erwärmt und die entstehenden Nebenprodukte der Polykondensation durch Anlegen von Vakuum oder Durchströmen des Granulats mit Inertgas abgeführt.

Im technischen Maßstab wird die Festphasennachkondensation kontinuierlich in Wanderbettreaktoren oder diskontinuierlich in Vakuumtaumel- oder Doppelkonusreaktoren durchgeführt. Im Wanderbettreaktor fließt das Polymergranulat als zusammenhängende Schüttung in einem Schacht im Gegenstrom zu Inertgas. Das Granulat wird im stetigen Strom dem Reaktor zu- und aus dem Reaktor abgeführt. Der Taumel- oder Doppelkonusreaktor besteht aus einem beheizbaren, rotierenden Behälter, der mit dem Granulat beschickt wird und dem, nach Ablauf der Reaktionszeit, das Granulat wieder entnommen wird. Um die Nebenprodukte abzuführen, wird während der Reaktion Vakuum an den Behälter angelegt.

Bei der Festphasennachkondensation von Polyamiden ist es üblich, das Granulat unmittelbar auf die gewünschte Nachkondensationstemperatur aufzuheizen, entweder indirekt an beheizten Oberflächen oder direkt in einem heißen Inertgasstrom. Es ist erstrebenswert, mit dem Granulat den Temperaturbereich zwischen Umgebungsstemperatur und Nachkondensationstemperatur so schnell wie möglich zu durchfahren, um bei vorgegebener Zykluszeit (diskontinuierliche Nachkondensation) oder vorgegebenen Reaktorvolumen die Anlage mit größtmöglicher Leistung zu betreiben. Eine geringere als die maximal mögliche Aufheizzeit wird bisweilen in Kauf genommen, um eine gleichmäßige Erwärmung des Granulates zu erzielen.

Bei üblicher Fahrweise spalten viele Polyamide nicht nur Wasser als Nebenprodukt ab, sondern auch Oligomere. Dabei handelt es sich um Begleitstoffe im Polymer, die bereits in der Schmelzepolykondensation entstanden sind. Bei den Temperaturen der Festphasennachkondensation wandern besonders die Oligomere mit niedriger Molmasse durch Diffusion an die Oberfläche der Polymerpartikel. Von dort gehen sie wegen ihres nicht vernachlässigbaren Dampfdrucks bei den Reaktionstemperaturen durch Sublimation in die Gasphase über. An den Stellen der Anlage mit niedriger Temperatur desublimieren sie wieder und bilden festhaftende Niederschläge, deren Dicke beständig wächst.

Besonders unangenehm macht sich dieses Verhalten im Wanderbettreaktor bemerkbar. Aus Kostengründen muß das verwendete Inertgas im Kreislauf geführt werden. Der Gaskreislauf enthält verschiedene Apparate und Maschinen, um das Inertgas von den dampfförmigen Reaktionsnebenprodukten sowie eingedrungenem Luftsauerstoff zu reinigen, umzuwälzen und zu erhitzen. Die im Inertgas mitgeführten Oligomere würden diese Apparate und Maschinen in kurzer Zeit unbrauchbar machen, wenn sie nicht aus dem Gas entfernt würden. Zu diesem Zweck sind verschiedene Maßnahmen üblich. In manchen Fällen genügt es, das Inertgas nach Verlassen des Reaktors mit einem Schlauchfilter zu reinigen, wobei die mitgeführten Oligomere als feiner Staub abgeschieden werden. Schlauchfilter neigen jedoch leicht zur Verstopfung, wenn Oligomere im Filtertuch desublimieren und von dort durch Abreinigen nicht wieder entfernt werden können. Häufig gelingt es auch nicht, die Oligomere vollständig abzuscheiden. Ein Rest verbleibt im Inertgas und verschmutzt die folgenden Apparate und Maschinen, wenn auch mit zeitlicher Verzögerung.

Eine häufiger verwendete Methode ist die Gaswäsche mit einer Flüssigkeit, die im Prozeß nicht stört. Eine solche Flüssigkeit ist im Falle der Polyamide zum Beispiel Wasser. Hier wird das verunreinigte Inertgas mit der Flüssigkeit abgekühlt, die Oligomere desublimieren und gehen in die Flüssigkeit über. Nachteilig ist hier ebenfalls unvollständiges Abscheiden des Feinstaubs sowie die Notwendigkeit, die Waschflüssigkeit, die weitgehend im Kreislauf geführt wird, ihrerseits zu reinigen, zum Beispiel durch Filtration. Der anfallende Filterschlamm kann zudem Entsorgungsprobleme verursachen.

Die Tatsache, daß die genannten Reinigungsmethoden keine vollständige Reinigung ermöglichen und die Anlagen deshalb trotzdem auf längere Sicht verschmutzen, hat zur Einführung der katalytischen Gasreinigung geführt. Das oligomer- und nebenprodukthaltige Inertgas wird auf etwa 400° C erhitzt, und unter Zufuhr von Luft durch ein Katalysatorbett geleitet. Dort verbrennen die organischen Verunreinigungen vollständig zu Kohlendioxid und Wasser. Es treten keine Verschmutzungen in den nachfolgenden Anlagenteilen mehr auf. Dieser Vorteil wird erkauft durch einen höheren Energieverbrauch und durch höhere Investitionskosten für Apparate, Katalysator und Regelung.

Oligomerablagerungen erschweren auch die diskontinuierliche Festphasennachkondensation im Taumel- oder Doppelkonusreaktor. Es bilden sich Niederschläge auf den Innenwänden des Reaktors, den Rohrleitungen sowie im gesamten Vakuumsystem. Die Produktion in diesen Anlagen muß häufig unterbrochen werden, um zu reinigen. Das verursacht Kosten durch Produktionsausfall, Reinigungsarbeiten und nicht spezifikationsgerechtes Produkt.

Für manche Verwendungszwecke werden Polyamide mit besonders niedrigem Gehalt an - mit Wasser oder Methanol - extrahierbaren Stoffen benötigt. Bei solchen Stoffen handelt es sich ganz überwiegend um Monomere und Oligomere. So eignet sich PA 66 mit reduziertem Oligomergehalt besser zum Spinnen und Verstrecken von Fäden. Auf Galetten und Fadenleitorganen treten weniger Ablagerungen auf, dadurch ergeben sich weniger Fadenabrisse, eine höhere Produktausbeute und damit eine größere Wirtschaftlichkeit des Spinnprozesses. Zugleich treten weniger Probleme in der Weiterverarbeitung der Fäden auf, zum Beispiel beim Färben, Texturieren, Ausrüsten der Gewebe etc.

Auch an den Spinndüsen treten weniger Ablagerungen durch desublimierte Oligomere auf, so daß auf die übliche Dampfbeschleierung verzichtet werden kann.

Oligomerarmes Polyamid 66 erschließt diesem Polymer neue Anwendungssgebiete. So können daraus Folien und Gefäße zur Verpackung von Produkten hergestellt werden, in die möglichst keine Fremdstoffe gelangen dürfen. Dies ist besonders im medizinischen Bereich von Bedeutung bei der Verpackung von Infusionslösungen und Blutersatzstoffen sowie Blutderivaten. Ferner ist das von Bedeutung bei der Verpackung von hochreinen Chemikalien, zum Beispiel für Chromatographieverfahren, Spektralanalyse etc. Endlich eignet sich oligomerarmes PA 66 besser zur Verpackung von Nahrungs- und Genußmitteln, da es weniger migrationsfähige Oligomerkomponenten enthält.

Aus der DE-A-2723549 ist ein Verfahren zur Herstellung von thermoplastischen Polyamiden durch kontinuierliche Polykondensation in fester Phase bekannt, bei dem Polyamid 6 Pellets mit einer Temperatur von 100°C in einen Schachtreaktor mit Maschendrahtgewebe eingeführt werden. Im oberen Bereich des Schachtreaktors sind eine Gaseinspeisung für Stickstoff mit 130°C und am unteren Ende eine Gaseinspeisung für Stickstoff mit 185°C vorgesehen, wobei die Pellets den Schachtreaktor bis zu einem Aüstragskonus durchlaufen.

US 3821171 beschreibt eine Festphasenpolymerisation von Polyamidgranulat. Dabei wird das Granulat in einem Ofen auf eine Temperatur zwischen 135°C bis 205°C vorgeheizt und in einen Schachtreaktor gegeben, in dem es bei Temperaturen über 200°C und weniger als 15°C unter dem Schmelzpunkt entsprechend der Schwerkraft durch den Reaktor bewegt wird.

Die US 3480596 offenbart ein Verfahren zum Herstellen eines Polymermaterials, bei dem Polymerchips durch einen Rohrreaktor bei einer Temperatur zwischen 190°C und 205°C geleitet werden und anschließend in einer Schmelzvorrichtung bei 291°C geschmolzen werden.

In der US 3634357 wird bei einem Verfahren zur Herstellung von Alkylterephthalat-Polyesterharz die Nachkondensation von Vorpolymermaterial beschrieben, die unter Anwesenheit einer M₂Ge Katalysators stattfindet, wobei M für alkalische Erden steht.

Aus der EP 0703264 A2 ist ein Verfahren zum Trocknen von kristallisierbarem Polyamid im amorphen Zustand bekannt bei dem das Polyamid aufgeheizt wird, um es bis zu einer Kristallinität von 15% zu kristallisieren. Anschließend wird das so kristallisierte Polyamid bei einer Trocknungstemperatur unter dem Schmelzpunkt weiter aufgeheizt.

EP 0284968 A1 beschreibt ein Verfahren zur Entfernung von Caprolactam und dessen Oligomeren aus Polyamid-granulat, das mit einer Temperatur von mindestens 100°C in eine senkrecht stehende Behandlungszone von oben eingebracht wird und unter Erhitzen auf eine Temperatur von 130°C bis 210°C nach unten geleitet wird, wobei überhitzter Wasserdampf mit einer Temperatur von 130°C bis 210°C von unten nach oben geführt wird. Das trockene Polyamidgranulat wird unten entnommen und das Caprolactam und dessen Oligomere werden mit dem Wasserdampf abgezogen.

DD 81566 offenbart ein Verfahren zur Herstellung von hochmolekularem Polyamid, bei dem das Granulat in einen ersten Vorheizer eingeführt wird, den es mit einer Temperatur von 160° verläßt. In einem zweiten Vorheizer wird das Granulat weiter auf 180°C erhitzt und fließt in einen Nachpolymerisationsreaktor, der auf 180°C gehalten wird.

Es ist Aufgabe dieser Erfindung, ein Verfahren zur Herstellung von Polyamiden mit reduziertem Gehalt an sublimierbaren Oligomeren durch Polykondensation in der festen Phase zu schaffen, bei dem während der Festphasennachkondensation Oligomerablagerungen im Reaktor, in den angeschlossenen Rohrleitungen, Apparaten und Maschinen nicht mehr oder in nur geringem Maße auftreten. Es ist außerdem Aufgabe dieser Erfindung, eine Vorrichtung zur kontinuierlichen Durchführung des genannten Verfahrens zu schaffen.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüche angegebenen Maßnahmen sind vorteilhafte Weiterbildungen und Verbesserungen möglich.

Entsprechend der Erfindung wird die Festphasennachkondensation nacheinander auf zwei verschiedenen Temperaturniveaus durchgeführt. Im ersten Schritt wird das Granulat auf eine Temperatur erwärmt, bei der niedermolekulare Oligomere - anscheinend durch chemische Reaktionen mit der Polymerkette - innerhalb der festen Phase abgebaut werden, bei der aber kein Übergang von Oligomeren in die Gasphase durch Sublimation zu beobachten ist. Erfindungsgemäß liegt diese Temperatur zwischen 70°C und 150°C, vorzugsweise zwischen 100°C - 120°C. Erst nach Einhalten einer ausreichenden Verweilzeit von zwei bis sechs Stunden bei dieser Temperatur wird in einem zweiten Schritt das Granulat auf die Temperatur der Festphasennachkondensation erwärmt, bei der die gewünschte Kettenlänge im Produkt in technisch und wirtschaftlich vertretbaren Zeiten erreicht wird. Diese Nachkondensationstemperatur liegt bei 170°C bis 10°C unterhalb der Schmelztemperatur, vorzugsweise bei 190°C - 210°C. Es tritt nach der Vorbehandlung im ersten Schritt im zweiten Schritt keine oder keine wesentliche Rückbildung von Oligomeren ein, so daß das Inertgas frei von Oligomeren bleibt und deswegen keine Verschmutzung von Anlagenkomponenten beobachtet wird.

Dieser Effekt wird dadurch unterstützt - ein weiteres Merkmal der Erfindung -, daß im Wanderbettreaktor der Inertgasmengenstrom und die Eintrittstemperatur des Granulats in den Reaktor so gewählt werden, daß die Temperatur des den Reaktor verlassenden Inertgases unter etwa 90° C liegt. Diese Temperatur ist polymerspezifisch und genauer dadurch definiert, daß Oligomere, die durch Sublimation und Desublimation bei Temperaturen unterhalb des Schmelzpunktes aus einem bestimmten Polymer gewonnen wurden, bei der Untersuchung durch DSC (differential scanning calorimetry) im N₂-Strom und bei einer Aufheizgeschwindigkeit von 10° C/min durch beginnende Sublimation einen endothermen Effekt erzeugen. Die sogenannte Onset-Temperatur dieses Effekts, die durch den Schnittpunkt der Tangente an die Grundlinie mit der Tangente an die Signalkurve nach Einsetzen des endothermen Effekts erhalten wird, bildet die obere Grenze für die Abgastemperatur aus dem Reaktor.

Das Einhalten dieser Temperatur im Abgasstrom verhindert es, daß geringe Mengen an Oligomeren, die trotz der zweistufigen Fahrweise noch ins Inertgas übergehen, sich auf dem von Abgas berührten Anlagenteilen niederschlagen und dort feste Krusten bilden.

Ein zusätzliches Merkmal der Erfindung besteht darin, daß das zur Nachkondensation verwendete Inertgas eine Taupunkttemperatur zwischen 0° C und 30° C hat. Es hat sich gezeigt, daß die Neigung zur Bildung von Oligomerkrusten auf den abgasberührten Anlagenteilen umso geringer ist, je höher die relative Feuchte des Abgases ist. Ein hoher Taupunkt des Inertgases hat zugleich den Vorteil, daß das Produkt im Falle des PA 66 weniger gelbstichig ist. Der Taupunkt des Inertgases kann jedoch nicht beliebig erhöht werden, da die Geschwindigkeit der Kettenverlängerungsreaktion mit steigender Taupunkttemperatur zurückgeht, so daß das erforderliche Reaktorvolumen bei vorgegebener Produktqualität zu groß wird.

Als Inertgas eignen sich alle Gase, die bei der Temperatur der Festphasennachkondensation mit dem Polyamid keine chemischen Reaktionen eingehen, es weder verfärben noch sonstwie schädigen. Geeignet sind insbesondere Stickstoff oder Kohlendioxid, die alle frei von Sauerstoff sein müssen.

Ausführungsbeispiele der vorliegenden Erfindung werden in Zusammenhang mit den beigefügten Zeichnungen näher erläutert. Es zeigen:
- Fig. 1: ein erstes Ausführungsbeispiel einer Vorrichtung zur Durchführung des erfindungsgemäßen Verfahrens,
- Fig. 2: HPLC-Diagramme vom Methanol-Extrakt des Polyamidgranulats als Rohstoff und nach Behandlung bei verschiedenen Temperaturen, und
- Fig. 3: ein weiteres Ausführungsbeispiel einer Vorrichtung zur Durchführung des erfindungsgemäßen Verfahrens.

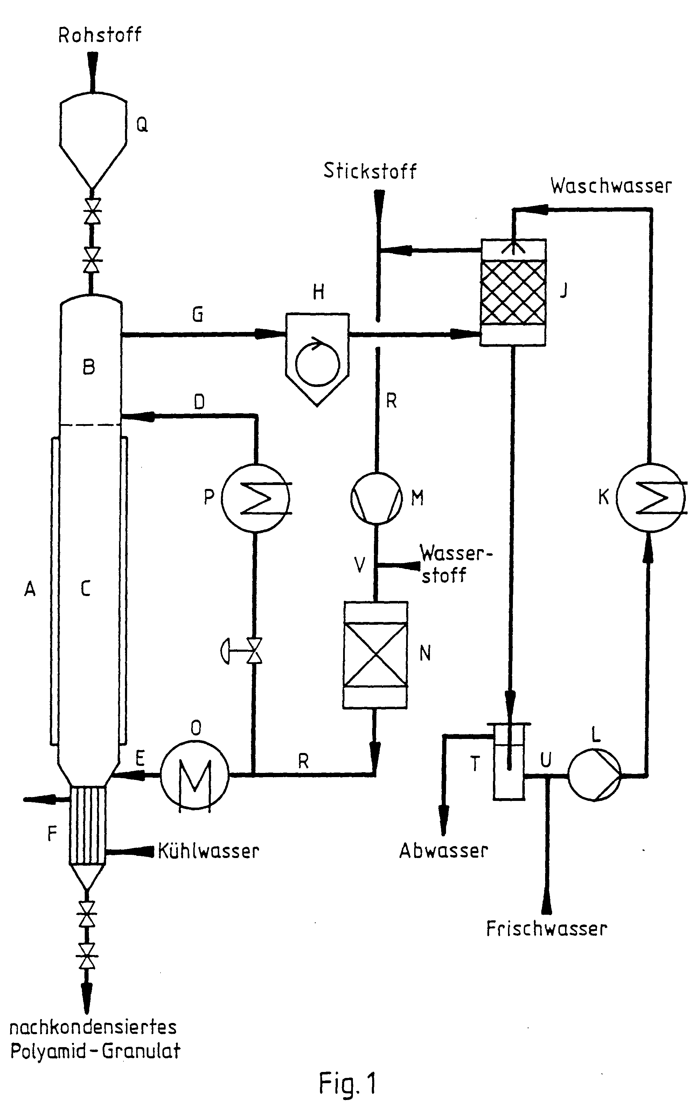

In Fig. 1 ist ein Wanderbettreaktor A vorgesehen, dem aus einem Rohstoffbehälter Q Polyamidgranulat zugeführt wird, das aus einer Schmelzepolykondensation mit einer vorgegebenen relativen Lösungsviskosität hergestellt wurde. Der Reaktor weist eine obere Zone B und eine untere Zone C auf, die auf unterschiedliche Temperaturen aufgeheizt sind. Ein Abgasstrom G wird über einen nicht dargestellten Abgasstutzen im oberen Bereich der Zone B abgeführt und im unteren Bereich der Zone B ist eine Zuführung für einen ersten Inertgasstrom D und im unteren Bereich der Zone C ist eine weitere Zuführung für einen zweiten Inertgasstrom E vorgesehen. Die Inertgaszuführungen sind jeweils über Wärmetauscher P und O mit einer Inertgasleitung R verbunden.

An die Zone C des Wanderbettreaktors A schließt sich ein Rohrbündelkühler F an, dem Kühlwasser zugeführt wird und der einen Auslaß für das nachkondensierte Polyamid-Granulat aufweist.

Der Abgasstutzen ist mit einem Zyklon H verbunden, der an einen Gaswäscher J angeschlossen ist. Der Gaswäscher J liegt in einem Wasserkreislauf S, in dem ein Absetzbecken T mit einem Auslaß für Abwasser, eine Frischwasserzufuhr U, eine Pumpe L und ein Kühler K vorgesehen sind. Der Wäscher J ist mit der Inertgasleitung verbunden, in der eine Pumpe M und ein mit Palladiumkatalysator gefüllter Reaktor N angeordnet ist, vor dem eine Wasserstoffzufuhr V vorgesehen ist.

Einem Wanderbettreaktor A gemäß Fig. 1 wird PA 66-Granulat mit 20° C zugeführt. In der oberen Zone des Reaktors, Zone B, wird das Granulat im Gegenstrom mit einem Inertgas, vorzugsweise Stickstoff, auf eine Temperatur zwischen 90° C und 150° C, vorzugsweise 110° C, aufgeheizt. Die Verweilzeit des Granulats in dieser Zone beträgt zwei bis sechs Stunden, vorzugsweise vier Stunden. Die gewünschte Temperatur des Stickstoffstroms wird dadurch hergestellt, daß der aus Zone C des Reaktors aufsteigende Strom hoher Temperatur mit einem zweiten Strom D niedriger Temperatur gemischt wird, der dem Reaktor seitlich zugeführt und durch spezielle Einbauten gleichmäßig über den Reaktorquerschnitt verteilt wird. Das Verhältnis der Massenströme des Stickstoffs zu dem des Granulats beträgt in Zone B 2,5 bis 15, vorzugsweise 3 bis 6.

Nach Verlassen der Zone B wird das Granulat in Zone C auf eine Temperatur zwischen 180° C und 230° C aufgeheizt und nachkondensiert. Temperatur und Verweilzeit in dieser Zone richten sich nach dem gewünschten mittleren Polykondensationsgrad des Produkts. Der Stickstoffstrom E erwärmt das Granulat auf die Nachkondensationstemperatur und die Nebenprodukte der Reaktion werden in dem Wanderbettreaktor A mit dem aufsteigenden Strom abgeführt. Das Massenstromverhältnis Inertgas zu Granulat beträgt in dieser Zone 2,5 bis 8, vorzugsweise 2,5 bis 5. Nach der durch den gewünschten mittleren Polykondensationsgrad vorgegebenen Verweilzeit bei der entsprechend vorgegebenen Temperatur gelangt das Produkt in einen Granulatkühler, wo die Reaktion durch Abkühlen auf 40° C beendet wird. Anschließend verläßt das Produkt die Anlage.

Die Stickstoffmassenströme E und D sind so aufeinander abgestimmt, daß im Zusammenwirken mit der Temperatur des in den Reaktor eintretenden Granulats der Abgasstrom G eine Temperatur von weniger als 90° C, vorzugsweise von 80° C und darunter hat. Das konkrete Verhältnis der Massenströme E und D ergibt sich mit dieser Bedingung aus einer einfachen Masse- und Energiebilanz des Reaktors.

Das Abgas strömt zunächst zur Abscheidung von Staub durch einen Zyklon H in einen Gaswäscher J, wo es mit Wasser gewaschen wird. Im Wasser sammelt sich restlicher Polymerstaub sowie Abbauprodukte des PA 66, insbesondere Cyclopentanon, Kohlendioxid und Spuren von Ammoniak. Das Waschwasser wird im Kreislauf geführt, wobei ständig ein geringer Anteil Frischwasser zugesetzt und eine entsprechende Menge Abwasser abgezogen wird. Vor Eintritt in den Gaswäscher J wird das Waschwasser im Kühler K auf eine Temperatur zwischen +0° C und 30° C, vorzugsweise 5° C bis 20° C eingestellt. Die pro Zeiteinheit umgewälzte Waschwassermenge wird so gewählt, daß das Inertgas die Eintrittstemperatur des Wassers in den Wäscher J annimmt. Auf diese Weise wird das Inertgas nicht nur gereinigt, sondern es wird gleichzeitig auch die Taupunkttemperatur eingestellt. Die Wahl der Taupunkttemperatur richtet sich unter anderem nach der gewünschten mittleren Kettenlänge im Produkt. Grundsätzlich verlangsamt sich die Geschwindigkeit der Polykondensation mit zunehmender Taupunkttemperatur. Es hat sich aber gezeigt, daß sich der Gelbstich des Produktes verringert, je höher die Taupunkttemperatur des Inertgases bei der Nachkondensation eingestellt wird. Jede Aufgabenstellung erfordert demnach einen Kompromiß zwischen Produktfarbe und Reaktionsgeschwindigkeit.

Verschiedene Beispiele sollen die Erfindung näher beschreiben, ohne jedoch deren Umfang einzuschränken. Die kennzeichnenden Polymereigenschaften in diesen Beispielen werden nach den im folgenden beschriebenen Meßmethoden bestimmt.

### Relative Lösungsviskosität

Es wird eine Lösung der Polyamidprobe in 96 %iger Schwefelsäure hergestellt. Die Polymerkonzentration beträgt 1 g/dl. Die Viskosität dieser Lösung wird in einem Ubbelohde-Kapillarviskosimeter bei 25° C gemessen. In demselben Gerät wird die Viskosität der polymerfreien Schwefelsäure gemessen. Die relative Lösungsviskosität der Probe ist der Quotient aus der Viskosität der Lösung und der des Lösungsmittels. Sie ist ein Maß für den mittleren Polykondensationsgrad bzw. die mittlere Molmasse der Polyamidprobe.

### Oligomerkonzentration im Polyamid

Die Polymerprobe wird mit Methanol in einer Soxhlet-Apparatur vier Stunden lang extrahiert. Das extrakthaltige Methanol wird eingedampft, der Rückstand wird getrocknet und gewogen. Der Quotient aus der Menge des Rückstands und der Polymereinwaage ergibt den Extraktgehalt des Polyamids, der sich aus Monomer und Oligomeren zusammensetzt. Anschließend wird der Rückstand mit einer 1:1 (Vol.)-Mischung aus Methanol und verdünnter Essigsäure (5 mmol/l) aufgenommen, die Lösung wird filtriert. Das Filtrat wird mit Hochleistungs-Flüssigkeitschromatographie (HPLC) bei 40° C analysiert (Säule: LiCrosorb RP 18 Fa. Merck, 250 mm Länge). Als Eluens dient die obengenannte Mischung aus Methanol und verdünnter Essigsäure. Die Detektion der einzelnen Komponenten erfolgt im UV-Licht bei 210 nm. Eine provisorische Oligomerkonzentration ergibt sich, wenn die Peakfläche eines Oligomers in Relation zur Summe aller Peakflächen gesetzt und mit diesem Faktor der Extraktgehalt des Polyamids multipliziert wird.

### Beispiel 1

PA 66-Granulat aus einer Schmelzepolykondensation mit einer relativen Lösungsviskosität von 2,5 wurde im Labormaßstab bei verschiedenen Temperaturen und Verweilzeiten im Vakuum von 0,5 mbar behandelt. Hierzu wurde eine Probe von ca. 20 g in eine Glasflasche mit Schliff eingewogen und mit einem Schliffdeckel mit Gasableitungsrohr verschlossen. Durch den Schliffdeckel ist ein Thermometer geführt, das in die Granulatschüttung eintaucht und die Granulattemperatur anzeigt. Die Flasche wurde auf einen Druck von 0,5 mbar evakuiert und in ein heißes Ölbad getaucht. Nach Eintauchen der Flasche ins Ölbad steigt die Temperatur in weniger als 10 min auf den gewünschten Wert an. Sobald die vorgesehene Verweilzeit abgelaufen war, wurde die Flasche dem Ölbad entnommen und durch Anblasen mit Druckluft abgekühlt. Dann wurde die Flasche belüftet, das Granulat entnommen und analysiert. Die Versuchsbedingungen und Analysenergebnisse sind in Tabelle 1 dargestellt. In den Versuchen 1 bis 3 wurden die Proben bei einer konstanten Temperatur behandelt. In Versuch 4 wurde die Probe zunächst auf niedrigem Temperaturniveau gehalten und erst nach Ablauf der angegebenen Verweilzeit t₁ auf eine höhere Temperatur erwärmt. Dort wurde die Probe dann während der Verweilzeit t₂ nachkondensiert.

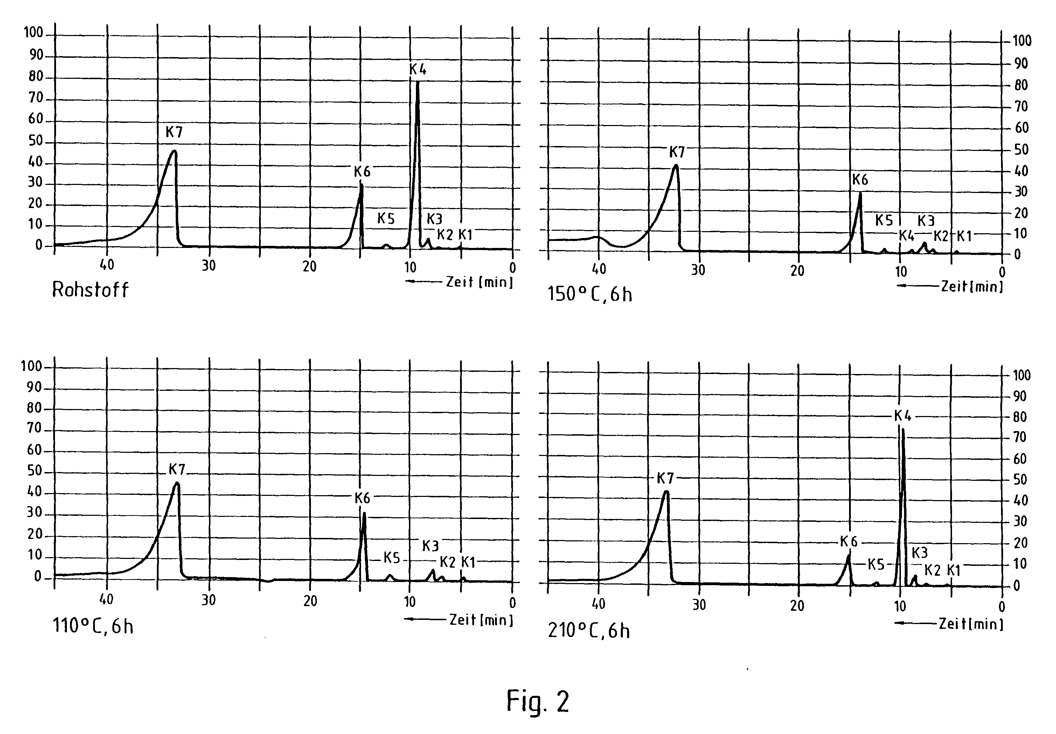

In Fig. 2 sind HPLC-Diagramme vom Extrakt des Rohstoffs sowie der sechs Stunden lang bei 110° C, 150° C und 210° C behandelten Proben zusammengestellt. Der Rohstoff aus der Schmelzepolykondensation zeigt im HPLC-Diagramm sieben klar getrennte Peaks. Auf eine Zuordnung dieser Peaks zu exakt definierten Monomeren oder Oligomeren wurde verzichtet. Sie wurden in der Reihenfolge ihrer Detektion mit K1 bis K7 bezeichnet. Nur die Oligomeren K4, K6 und K7 treten in relevanten Konzentrationen auf. Die übrigen sind vernachlässigbar.

K6 und K7 nehmen mit steigender Behandlungstemperatur ab, so wie es der mit der Festphasennachkondensation von Polyamiden vertraute Fachmann auch erwartet. Mit 0,78 % (Masse) ist K4 die Hauptkomponente im Rohstoff. Nach sechstündiger Behandlung bei 110° C ist diese Komponente restlos verschwunden, bei 150° C finden sich nur Spuren. Bei 210° C ist die Konzentration von K4 in derselben Größenordnung wie im Rohstoff. Damit zeigt K4 ein entgegengesetztes Verhalten wie K6 und K7. Die zweistufige Behandlung bei 110° C/210° C (Versuch 4) führt überraschenderweise zu keiner merklichen Rückbildung von K4.

Die Belegung der kalten Teile der Apparatur mit Sublimat (Oligomere) steigt dabei mit der Temperatur und mit der Konzentration der Komponente K4. Das bedeutet, daß K4 bei 110° C nicht durch Sublimation aus der Probe entwichen sein kann, und daß K4 entscheidende Bedeutung für die Belagbildung auf kalten Flächen hat.

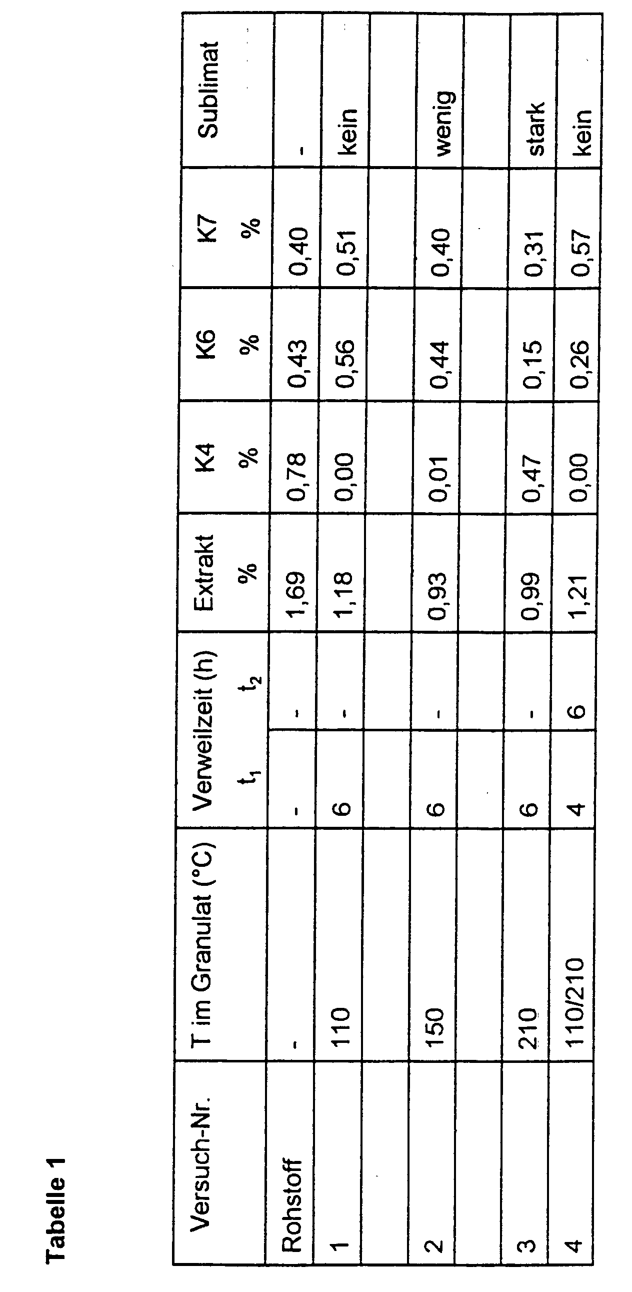

### Beispiel 2

Polyamid 66-Granulat mit einer relativen Lösungsvikosität von 2,4, einem Extraktgehalt von 1,69 % sowie einer Konzentration der Oligomerkomponente K4 von 0,78 % wird einem Wanderbettreaktor A nach Fig. 1 mit einer Temperatur von 20° C zugeführt. In der oberen Zone B des Reaktors wird das Granulat im Gegenstrom mit Stickstoff auf eine Temperatur von 110° C aufgeheizt. Die Verweilzeit des Granulats in dieser Zone beträgt vier Stunden. Der Stickstoffstrom mit einer Temperatur von 110° C wird durch seitliches Einleiten eines Stickstoffstroms D mit 70° C in den Reaktor und Mischen desselben mit dem aus Zone C des Reaktors kommenden heißen Gasstrom hergestellt. Das Verhältnis der Massenströme Gas zu Granulat in Zone B wird auf 5,5 eingestellt.

Nach vier Stunden Aufenthalt in Zone B tritt das Granulat in Zone C ein, wo ein zweiter Stickstoffstrom es auf eine Temperatur von 210° C erwärmt. Das Massenstromverhältnis Gas/Granulat beträgt hier 3,5. Nach zwanzig Stunden Verweilzeit in Zone B gelangt das Granulat in den Rohrbündelkühler F. Dort fließt es durch die Rohre, während Kühlwasser die Rohre umströmt. Mit einer Temperatur von unter 50° C verläßt das Granulat die Anlage. Es hat eine relative Lösungsviskosität von 5,2. Der Extraktgehalt beträgt 0,40 %. Die HPLC-Analyse zeigt, daß die Oligomerkomponente K4 auf weniger als 0,001 % abgenommen hat.

Der Abgasstrom G aus dem Reaktor hat eine Temperatur von 75° C. Mitgeführter Staub wird im Zyklon H abgeschieden. Im Wäscher J wird der Stickstoff mit Wasser von den Nebenprodukten der Reaktion gereinigt und ein Taupunkt von 15° C im Gas eingestellt. Das Gas wird wird mit dem Gebläse M rekomprimiert. Eingedrungene Sauerstoffspuren werden mit eingeleitetem Wasserstoff an einem Palladiumkatalysator N zu Wasser verbrannt. Danach wird der Gasstrom in die zwei Ströme E und D aufgeteilt, wobei Strom E über den Wärmetauscher O auf 210° C, Strom D über den Wärmetauscher P auf 70° C erwärmt wird.

Nach einwöchigem Betrieb wurde die Anlage abgestellt. Die vom Abgas berührten Anlagenteile wurden auf Oligomerablagerungen untersucht. Reaktordeckel, Abgasrohr zum Zyklon und weiter zum Wäscher sowie der Zyklon selbst und das Gebläse waren frei von krustigen Ablagerungen.

### Beispiel 3

Der Wanderbettreaktor nach Fig. 1 wird nur mit dem Stickstoffstrom E betrieben, der mit einer Temperatur von 210° C in den Apparat eintritt. Der Strom D beträgt null. Das Massenstromverhältnis Gas/Granulat ist im gesamten Reaktor 5,5. Das Abgas nimmt eine Temperatur von 115° C an. Im übrigen wird die Anlage wie in Beispiel 2 betrieben.

Das Produkt hat eine relative Lösungsviskosität von 5,7. Nach einwöchigem Betrieb wird die Anlage stillgelegt. Der Reaktordeckel, die Rohrleitung zum Zyklon und weiter zum Wäscher sind mit einer fest haftenden Kruste überzogen, die nur mit Kraftaufwand, zum Beispiel mit einer Stahldrahtbürste, zu entfernen ist. Auch das Innere des Gebläses ist mit einer feinkörnigen, sehr dünnen Schicht überzogen.

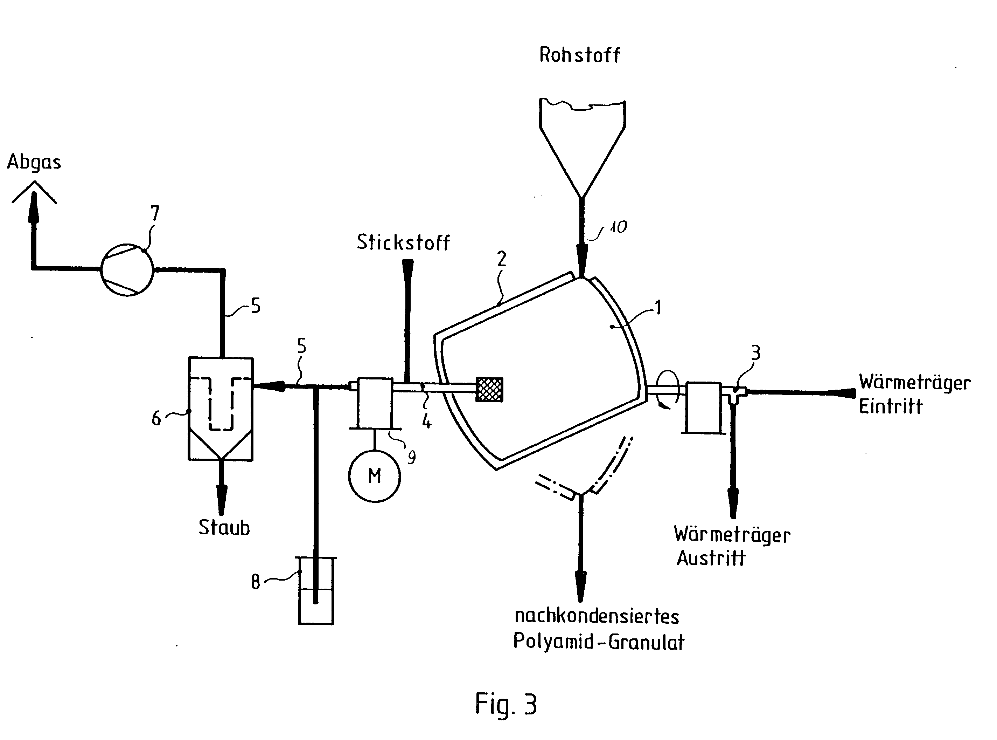

In Fig. 3 ist eine Vorrichtung zur Durchführung des Verfahrens mit einem Taumelreaktor 1 dargestellt. Der Taumelreaktor 1 weist einen Doppelmantel 2 auf, der über eine Wärmeträgerölleitung 3 mit einem Wärmeträgereintritt und einem dazu konzentrischen Wärmeträgeraustritt verbunden ist. Ein mit einem Sieb versehener Rohrstutzen 4 dient sowohl zum Evakuieren des Reaktors 1 als auch zum Spülen mit Inertgas. Ein Antrieb 9 läßt den Reaktor um die durch Rohrstutzen 4 und Wärmeträgerölleitung 3 gebildete Achse rotieren. Über eine Rohrleitung 5 und einen Abscheider 6 kann der Reaktor mit der Vakuumpumpe 7 evakuiert werden. Bei Inertgasspülung des Reaktors entweicht das durch den Stutzen 4 zugeführte Gas über eine atmosphärische Abtauchung 8. Ein Stutzen 10 dient sowohl zum Befüllen des Reaktors mit Granulat als auch zum Entleeren.

### Beispiel 4

Der Taumelreaktor 1 gemäß Fig. 3 wird mit 300 kg PA 66-Granulat von 20° C und 0,2 % Feuchte befüllt, so daß das Granulat etwa 50 % des Behältervolumens einnimmt. Das Granulat hat dieselben Eigenschaften wie der Rohstoff in Beispiel 2.

Dann wird der Apparat verschlossen und mit Stickstoff sauerstofffrei gespült. Wärmeträgeröl mit einer Temperatur von 120° C strömt durch den Doppelmantel 2 des Reaktorbehälters. Die Rotation des Behälters um seine Diagonale mit 0,5 Umdrehungen pro Minute beschleunigt das Aufheizen und Durchmischen der Granulatcharge. Nach vier Stunden hat die Schüttung im Reaktor 1 eine Temperatur von 110° C erreicht. Nach weiteren zwei Stunden, in denen die Granulattemperatur auf 110° C gehalten wird, wird die Temperatur des Wärmeträgers auf 220° C erhöht, wo sie fünfzehn Stunden lang gehalten wird. Anschließend wird der Reaktor zusammen mit seinem Inhalt auf 60° C abgekühlt und entleert. Während der ganzen Zeit zwischen erstem Aufheizen und Entleeren wird der Reaktor in Abständen von einer Stunde auf ca. 20 mbar evakuiert, um Wasserdampf, der durch die Trocknung und die Reaktion gebildet wurde, zu entfernen. Sobald ca. 20 mbar erreicht sind, wird die Verbindung zur Vakuumpumpe unterbrochen und der Reaktorbehälter mit Stickstoff geflutet, bis Atmosphärendruck eingestellt ist. Anschließend wird ein geringer Stickstoffstrom durch den Behälter geleitet, der durch die atmosphärische Abtauchung 8 aus der Anlage abfließt.

Nach Ablassen des Granulats aus dem Reaktor sind dessen Innenwände und Heizflächen metallisch blank und nur von einer sehr dünnen, elektrostatisch anhaftenden Staubschicht bedeckt, die durch Blasen mit Druckluft leicht entfernt werden kann. Das Granulat hat einen Extraktgehalt von 0,52 %. Die Konzentration der Oligomerkomponente K4 beträgt laut HPLC-Anlayse weniger als 0,001 %.

### Beispiel 5

PA 6 fällt bei der Herstellung in der Schmelze mit ca. 10 % wasserextrahierbaren Anteilen an. Dieser Anteil ist für alle Anwendungen hinderlich und wird stets mit Wasser auf einen Rest extrahiert, der unter 1 % liegt. Bei der üblichen Festphasennachkondensation von derart extrahiertem PA 6 bleibt normalerweise der Extraktanteil unverändert oder steigt sogar an, während sich die kälteren Flächen der Nachkondensationsanlage mit schwer entfernbarem Sublimat überziehen. Eine Verfahrensweise, die den Extraktanteil reduziert ist demnach vorteilhaft für die Weiterverarbeitung des PA 6-Granulats.

PA 6-Granulat aus einer Schmelzepolykondensation mit einer relativen Lösungsviskosität von 2,41 und einem Extraktgehalt von 0,92 % wurde im Labormaßstab bei verschiedenen Temperaturen und Verweilzeiten im Stickstoffstrom behandelt. Hierzu wurde eine Probe von ca. 20 g in eine Gaswaschflasche mit Fritte eingewogen und mit einem Schliffdeckel mit Gaseinleitungs- und Gasableitungsrohr verschlossen. Durch den Schliffdeckel ist ein Thermometer geführt, das in die Granulatschüttung eintaucht und die Granulattemperatur anzeigt. Die Granulatschicht in der Flasche wurde durch die Fritte mit einem Stickstoffstrom von 12 l/h durchströmt. Nach Eintauchen der Flasche in ein heißes Ölbad steigt die Temperatur in weniger als 10 min auf den gewünschten Wert an. Sobald die vorgesehene Verweilzeit abgelaufen war, wurde die Flasche dem Ölbad entnommen und durch Anblasen mit Druckluft abgekühlt. Dann wurde die Flasche geöffnet, das Granulat entnommen und analysiert. Die Versuchsbedingungen und Analysenergebnisse sind in Tabelle 1 dargestellt.

In Versuch 1 und 2 wurde die Probe bei einer konstanten Temperatur behandelt. In Versuch 3 wurde die Probe zunächst auf niedrigem Temperaturniveau gehalten und erst nach Ablauf der angegebenen Verweilzeit t₁ auf eine höhere Temperatur erwärmt. Dort wurde die Probe dann während der Verweilzeit t₂ nachkondensiert.

Die Konzentrationen der zyklischen Oligomere in Tabelle 2 wurden mit HPLC bestimmt. Für Caprolactam und das zyklische Dimer wurden Eichmessungen mit Reinsubstanzen vorgenommen. Höhere Oligomere wurden mit dem Eichfaktor für das zyklische Dimer berechnet.

Die Meßergebnisse in Tabelle 2 zeigen die Vorteile einer Nachkondensation des PA 6 in zwei Temperaturstufen.

Die sechsstündige Behandlung des Granulats bei 150°C (Versuch 1) reduziert den wasserextrahierbaren Anteil von 0,92 % auf 0,78 %. Dabei ist kaum eine Belegung der kälteren Apparaturteile mit Sublimat zu erkennen. Caprolactam und zyklische Oligomere können demnach nicht in nennenswerten Mengen aus dem Granulat entwichen sein. Die relative Lösungsviskosität steigt nur wenig an, weil die Temperatur für eine Festphasennachkondensation zu niedrig ist.

Behandelt man das Granulat in einer einzigen Temperaturstufe bei 190°C (Versuch 2) steigt die relative Lösungsviskosität in 6 Stunden zwar auf 2,94 an, der Extraktanteil nimmt jedoch nicht nennenswert ab. Erst die Behandlung in zwei Temperaturstufen (Versuch 3) vereinigt einen in der Praxis brauchbaren Anstieg der relativen Lösungsviskosität mit einer deutlichen Reduzierung des Extraktanteils. Die Belegung der kalten Apparaturteile mit Sublimat war dabei geringer als bei Versuch 2. Der geringere Extraktanteil in Versuch 3 kann deswegen nicht durch stärkere Sublimation verursacht sein.

Der Caprolactamgehalt wurde durch die Art der Versuchsführung kaum beeinflußt und liegt in allen Versuchen nahe dem Wert im Rohstoff. Die Arbeitsweise mit zwei Temperaturniveaus (Versuch 3) führt zu deutlich reduzierten Konzentrationen der zyklischen Oligomeren im Vergleich zu Versuch 2 und insbesondere zum Rohstoff. Dies ist von Bedeutung für die Belagbildung und Verschmutzung in technischen Anlagen. Während die Belegung mit Caprolactam durch Beheizen der Reaktorwände und Rohrleitungen bei Temperaturen nahe den Prozeßtemperaturen leicht verhindert werden kann, ist das bei den zyklischen Oligomeren wegen des wesentlich geringeren Dampfdrucks nicht möglich. Die hierzu notwendigen Temperaturen wären unwirtschaftlich hoch und würden zur Zersetzung der im Abgas mitgeführten Stoffe führen und damit zu noch stärkerer Verschmutzung.

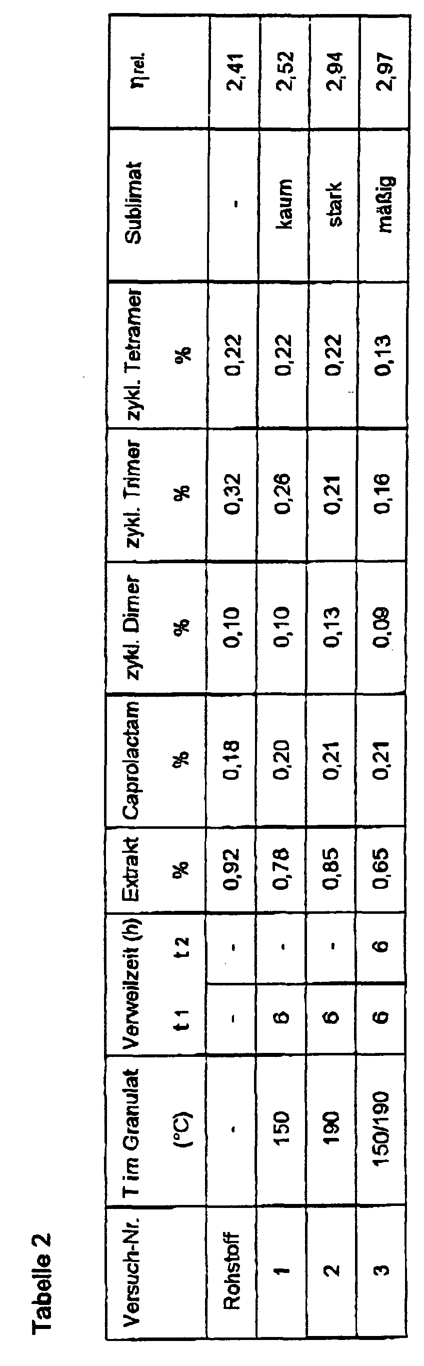

## Patentansprüche

1. Verfahren zur Herstellung von Polyamid, bei dem durch Polykondensation in der Schmelze hergestelltes Polyamidgranulat in der festen Phase nachkondensiert wird, wobei es erwärmt wird, **dadurch gekennzeichnet,** daß das Polyamidgranulat in einem ersten Schritt auf eine erste Temperatur zwischen 70°C und 150°C erwärmt und für einen vorbestimmten Zeitraum zwischen zwei und sechs Stunden auf dieser Temperatur gehalten wird und anschließend in einem zweiten Schritt auf eine zweite höhere, aber unterhalb des Schmelzpunktes liegende Temperatur, die zwischen 170°C und 10°C unterhalb des Schmelzpunktes liegt, aufgeheizt und bei dieser Temperatur nachkondensiert wird, bis der gewünschte mittlere Polykondensationsgrad erreicht wird.

2. Verfahren nach Anspruch 1, dadurch gekennzeichnet, daß die Nachkondensation in einem Inertgasstrom oder unter Vakuum durchgeführt wird.

3. Verfahren nach Anspruch 1 oder 2, dadurch gekennzeichnet, daß das für die Nachkondensation verwendete Inertgas eine Taupunkttemperatur zwischen 0°C und 30°C aufweist.

4. Verfahren nach einem der Ansprüche 1 bis 3, dadurch gekennzeichnet, daß das für die Nachkondensation verwendete Inertgas eine Taupunkttemperatur zwischen 5°C und 20°C aufweist.

5. Verfahren nach einem der Ansprüche 1 bis 4, dadurch gekennzeichnet, daß es kontinuierlich in einem Wanderbettreaktor durchgeführt wird, dem Inertgas mit mindestens zwei unterschiedlichen Temperaturen zugeführt wird, wobei das Granulat erst die Zone niedriger Temperatur, anschließend die Zone höherer Temperatur durchströmt.

6. Verfahren nach Anspruch 5, dadurch gekennzeichnet, daß die Massenströme und Eintrittstemperaturen des Inertgases und des Polyamidgranulats so gewählt wird, daß die Abgastemperatur kleiner als 90°C ist.

7. Verfahren nach einem der Ansprüche 1 bis 4, dadurch gekennzeichnet, daß es diskontinuierlich in einem Taumel-, Doppelkonus- oder Trommelreaktor durchgeführt wird.

8. Verfahren nach Anspruch 7, dadurch gekennzeichnet, daß der Reaktor in Intervallen evakuiert und mit Stickstoff geflutet wird.

9. Vorrichtung zur kontinuierlichen Durchführung des Verfahrens nach einem der Ansprüche 1 bis 6, dadurch gekennzeichnet, daß ein Wanderbettreaktor (A) mit einem Zulauf für das Polyamidgranulat und einem Auslaß für das nachkondensierte Polyamidgranulat vorgesehen ist und daß der Reaktor (A) eine erste mit dem Zulauf verbundene Zone (B) mit der ersten Temperatur und eine sich daran anschließende zweite Zone (C) mit der zweiten Temperatur aufweist.

10. Vorrichtung nach Anspruch 9, dadurch gekennzeichnet, daß die jeweilige Zone (B,C) eine eigene Zuführung (D,E) für Inertgas aufweist.

11. Vorrichtung nach Anspruch 9 oder 10, dadurch gekennzeichnet, daß in der ersten Zone (B) der Massestrom des Inertgases zu dem des Granulats 2,5 bis 15, vorzugsweise 3 bis 6, und in der zweiten Zone (C) der Massestrom des Inertgases zu dem des Granulats 2,5 bis 8, vorzugsweise 2,5 bis 5, betragen.

12. Vorrichtung nach einem der Ansprüche 9 bis 11, dadurch gekennzeichnet, daß im oberen Bereich der ersten Zone (B) ein Abgasstutzen für die Abfuhr des Abgases angeordnet ist, der über eine Staubabschneidevorrichtung (H) mit einem Gaswäscher (J) zur Reinigung des Nebenprodukte enthaltenden Abgases und zur Einstellung der Taupunkttemperatur des Inertgases verbunden ist, dessen Waschwasser im Kreislauf geführt wird.

13. Vorrichtung nach Anspruch 12, dadurch gekennzeichnet, daß der Gaswäscher (J) mit den Zuführungen (D, E) für Inertgas über eine Inertgaszuleitung (R) verbunden ist, in die gereinigtes Inertgas eingeleitet wird.

## Claims

1. Process for the preparation of polyamides, wherein polyamide granulate prepared in the melt by way of poly-condensation is post-condensed in the solid phase whilst being heated, **characterised in that** the polyamide granulate is in a first step heated to a first temperature between 70°C and 150°C and held at this temperature for a predetermined temporal period of between two and six hours and thereafter in a second step heated to a second higher temperature, but still between 170°C and 10°C below the melting point, and at this temperature post-condensed until the desired medium poly-condensation degree is arrived at.

2. Process according to Claim 1, **characterised in that** the post-condensation is carried out in an inert gas flow or under vacuum.

3. Process according to Claim 1 or 2, **characterised in that** the inert gas used for post-condensation has a thawing point temperature between 0°C and 30°C.

4. Process according to one of Claims 1 to 3, **characterised in that** the inert gas used for post-condensation has a thawing-point temperature between 5°C and 20°C.

5. Process according to one of Claims 1 to 4, **characterised in that** it is performed continuously in a moving bed reactor which is fed inert gas at a minimum of two different temperatures, and the granulate first passes through the zone of lower temperature and thereafter through the zone of higher temperature.

6. Process according to Claim 5, **characterised in that** the mass flows and entry temperatures of the inert gas and the polyamide granulates are chosen so that the waste gas temperature is below 90°C.

7. Process according to one of Claims 1 to 4, **characterised in that** it is performed discontinuously in a tumble, double-cone or drum reactor.

8. Process according to Claim 7, **characterised in that** the reactor is evacuated at intervals and flooded with nitrogen.

9. Apparatus for continuously carrying out the process according to one of Claims 1 to 6, **characterised in that** a moving bed reactor (A) with a feed for the polyamide granulate and an outlet for post-condensed polyamide granulate is provided and that the reactor (A) comprises a first zone (B) which is linked to the feed and at the first temperature and adjacent thereto a second zone (C) at the second temperature.

10. Apparatus according to Claim 9, **characterised in that** the respective zone (B, C) comprises its own feed (D, E) for inert gas.

11. Device according to Claim 9 or 10, **characterised in that** in the first zone (B) the mass flow of the inert gas relative to the granulate is 2.5 to 15, preferably 3 to 6, and in the second zone (C) the mass flow of the inert gas relative to the granulate is 2.5 to 8, preferably 2.5 to 5.

12. Apparatus according to one of Claims 9 to 11, **characterised in that** in the upper area of the first zone (B) is arranged a waste-gas socket for discharging waste gas, which is ducted via a dust separation device (H) with a gas washer (J) for purification of the by-product containing waste gases and for setting the thawing point temperature of the inert gas the wash water of which is within the circulation.

13. Apparatus according to Claim 12, **characterised in that** the gas washer (J) is connected with feeds (D, E) for inert gas via an inert gas feed (R), into which the purified inert gas is introduced.

## Revendications

1. Procédé de production de polyamide dans lequel un granulé de polyamide produit par polycondensation à l'état fondu est post-condensé en phase solide, opération pendant laquelle il est chauffé, caractérisé en ce que, dans une première phase, le granulé de polyamide est porté à une première température comprise entre 70°C et 150°C et maintenu à cette température pendant un intervalle de temps prédéterminé d'entre deux et six heures et, ensuite, dans une deuxième phase, il est porté à une deuxième température plus élevée mais située au-dessous du point de fusion, et qui est comprise entre 170°C et 10°C au-dessous du point de fusion, et il est post-condensé à cette température jusqu'à ce que le degré de polycondensation moyen souhaité soit atteint.

2. Procédé selon la revendication 1, caractérisé en ce que la post-condensation est exécutée dans un courant de gaz inerte ou sous vide.

3. Procédé selon la revendication 1 ou 2, caractérisé en ce que le gaz inerte utilisé pour la post-condensation présente un point de rosée compris entre 0°C et 30°C.

4. Procédé selon une des revendications 1 à 3, caractérisé en ce que le gaz inerte utilisé pour la post-condensation présente un point de rosée compris entre 5°C et 20°C.

5. Procédé selon une des revendications 1 à 4, caractérisé en ce qu'il est mis en oeuvre en continu dans un réacteur à lit mobile auquel un gaz inerte est acheminé à au moins deux températures différentes, le granulé parcourant tout d'abord la zone à basse température et, ensuite, la zone à température plus élevée.

6. Procédé selon la revendication 5, caractérisé en ce que les débits massiques et les températures d'entrée du gaz inerte et du granulé de polyamide sont choisis de manière que la température du gaz effluent soit inférieure à 90°C.

7. Procédé selon une des revendications 1 à 4, caractérisé en ce qu'il est mis en oeuvre de façon discontinue dans un réacteur oscillant, à double cône ou à tambour.

8. Procédé selon la revendication 7, caractérisé en ce que le réacteur est mis sous vide et rempli d'azote par intervalles.

9. Dispositif pour la mise en oeuvre en continu du procédé selon une des revendications 1 à 6, caractérisé en ce qu'il est prévu un réacteur à lit mobile (A) comprenant une arrivée pour le granulé de polyamide et une sortie pour le granulé de polyamide post-condensé et en ce que le réacteur (A) présente une première zone (B) reliée à l'arrivée et présentant la première température, et une deuxième zone (C) qui y fait suite et qui présente la deuxième température.

10. Dispositif selon la revendication 9, caractérisé en ce que chaque zone (B, C) présente sa propre arrivée (D, E) pour le gaz inerte.

11. Dispositif selon la revendication 9 ou 10, caractérisé en ce que, dans la première zone (B), le débit massique du gaz inerte est dans un rapport de 2,5 à 15, de préférence de 3 à 6, relativement à celui du granulé et que, dans la deuxième zone (C), le débit massique du gaz inerte est dans le rapport de 2,5 à 8, de préférence de 2,5 à 5, relativement à celui du granulé.

12. Dispositif selon une des revendications 9 à 11, caractérisé en ce que, dans la région supérieure de la première zone (B), est disposée une tubulure de gaz effluent pour l'évacuation du gaz effluent, qui est reliée, par l'intermédiaire d'un dispositif de séparation des poussières (H) à un laveur de gaz (J) destiné à épurer le gaz effluent contenant des sous-produits et à établir le point de rosée du gaz inerte, dont l'eau de lavage circule en circuit fermé.

13. Dispositif selon la revendication 12, caractérisé en ce que le laveur de gaz (J) est relié aux arrivées (D, E) pour le gaz inerte par l'intermédiaire d'une conduite d'arrivée de gaz inerte (R), dans laquelle le gaz inerte épuré est introduit.
